# EUROPEAN PATENT SPECIFICATION

(11) **EP 4 289 685 B1**
(45) Date of publication and mention of the grant of the patent: **30.04.2025**
(21) Application number: 22177762.6
(22) Date of filing: 08.06.2022
(51) Int. Cl.: B60R 21/38, F15B 15/19

(54) **A SAFETY DEVICE IN A VEHICLE**
SICHERHEITSVORRICHTUNG IN EINEM FAHRZEUG
DISPOSITIF DE SÉCURITÉ DANS UN VÉHICULE

(43) Date of publication of application: 13.12.2023
(73) Proprietor: Autoliv Development AB, 447 83 Vårgårda (SE)
(72) Inventor: ANDERSSON, Mikael, 447 83 Vårgårda (SE); RYDSMO, Erik, 447 83 Vårgårda (SE)
(74) Representative: AWA Sweden AB

(56) References cited:
- EP-A1- 1 424 247
- EP-A2- 1 733 929
- EP-A2- 1 808 606
- DE-A1- 102007 009 096
- DE-A1- 102018 108 994
- FR-A1- 2 721 073
- JP-A- 2008 075 739
- US-A1- 2006 218 918
- US-B2- 6 942 261

## Description

### Technical field

The present invention refers to a safety device in a vehicle, the safety device comprising a modular actuator.

### Technical background

It is well known in the art to use actuators in safety devices in a motor vehicle which actuators are formed by a piston that is moved from a retracted position into an extended position by gas generated by a gas generator. EP1 808 606 and FR 2 721 073 A1 disclose examples of pyrotechnical actuators. One example is in the use of a hood lifter to lift the hood or bonnet of a vehicle in order of providing protection for a pedestrian hit by the vehicle. It has been observed that if a motor vehicle hit a pedestrian, the bumper of the vehicle will often strike the legs or lower torso of the pedestrian. Hence, the legs of the pedestrian will normally be pushed in the direction of travel of the vehicle and the head and upper torso will normally be tilted towards the hood and windscreen of the vehicle. This tilting movement often causes the head or upper torso of the pedestrian to first make contact with the hood and thereafter, if the impact force from the hit is strong enough and the vehicle continues forward, also reach the windscreen. In order to minimize the damages of the pedestrian caused from such an impact as described above motor vehicles are often provided with so called hood lifting arrangements. These arrangements are generally constructed such that the rear part of the hood, i.e. the part closest to the windscreen, is lifted by one or more actuators. The hood will in general provide an efficient, flexible impact energy absorbing structure in the case when a vehicle hit a pedestrian. However, if the hood is not lifted, there is a higher risk that the hood will be deformed to such extent that hard, non-flexible parts beneath the hood, e.g. an engine block, make contact with the hood and an undesired, stiff impact may be the result from the collision between the pedestrian and the vehicle. In addition, the raising of the rear part of the hood will make the surface of the hood further inclined and contribute to a reduced speed of a body moving towards the windshield. In addition, a less acute angle between the wind shield and the hood will also contribute to a less severe condition for a person being hit by a vehicle. EP1424247A1 is the closest prior art document and discloses a safety device in a vehicle, the safety device comprising a modular actuator comprising a housing having a first end, a piston adapted to fit in the housing and being configured to be moved from a retracted position to an extended position, and a gas generator, wherein the piston comprises an axially extending recess having a mouth facing the first end of the housing, the piston has a first end forming a pressure surface facing the first end of the housing, a gas chamber is formed between the pressure surface of the piston and an inner wall of the first end of the housing, and the gas generator is in fluid connection with the gas chamber.

Depending on the intended application, and the design of the vehicle or vehicle parts, there is sometimes a need to change the characteristics of the actuator in terms of the force applied by the piston versus the time, or the stroke length versus time. US 6 942 261 B2 discloses an example of a damped actuator. Another parameter that may be specific for a given application is the stroke length of the piston. This is typically made by providing a range of different dimensions of actuators and also by changing the pyrotechnical load of the gas generator. This is however costly since each dimension requires separate toolings etc to provide housings and pistons.

There is hence a need for an easier way to provide actuators having different characteristics depending on an intended application.

### Summary

It is an object of the present invention to provide a safety device using an actuator where the actuator has a design that allows the characteristics of an actuator to be adapted to a specific application.

Another object is to provide a safety device comprising an actuator that allows an easy adaption of e.g. force, speed and stroke length to thereby allow the characteristics of the safety device to be adapted to a specific application.

These and other objects that will be apparent from the following summary and description are achieved by a safety device in a vehicle, the safety device comprising a modular actuator comprising a housing having a first end, a piston adapted to fit in the housing and being configured to be moved from a retracted position to an extended position, and a gas generator, wherein
the piston comprises an axially extending recess having a mouth facing the first end of the housing,
the piston has a first end forming a pressure surface facing the first end of the housing, whereby a gas chamber is formed between the pressure surface of the piston and an inner wall of the first end of the housing,
the gas generator is in fluid connection with the gas chamber; and wherein
the volume of the gas chamber as seen in a condition when the piston is in the retracted position is configured to be selectively adapted by
coaxially arranging a spacer inside the recess of the piston.

Accordingly, safety device comprising a modular actuator is provided in which the volume of the gas chamber, as seen in a condition when the piston is set to its retracted position, may be changed to allow the characteristics of the actuator to be adapted to an intended application. By way of example, it is possible to adapt the force with which the piston meets the intended impact surface, such as a hood of a motor vehicle, or the time that it takes to tension a seat belt. It is also possible to adapt the time required to reach a certain stroke length of the piston based on the intended application. All of this may be made by relying on one single housing dimension and providing this housing with different interchangeable piston designs, piston sizes and also one or more spacers. Not only is it made possible to tailor make an actuator that meets a specific application, but it is also made possible to cut cost in terms of the number of different actuators that must be provided to the market.

The recess may in one embodiment have a uniform cross section along its axial extension. The recess may in another embodiment have a cross section that tapers towards the second end of the housing.

The recess may be used to increase the volume of the gas chamber as compared to a uniform piston received in a cylindrical housing. The recess may also be used to increase or decrease the pressure surface of the piston, i.e. surface where the gas that is generated by the gas generator impacts the piston upon a deployment of the gas generator. The recess is used to receive one or more spacers. Further, the recess may be used to support the gas generator. All these aspects may be used independently of each other to influence the characteristics of the actuator to thereby meet a specific application while using one and the same housing.

The gas generator may be arranged in the recess. The recess may in one embodiment be used to fixate the gas generator to the piston. The fixation may by way of example be made by press-fitting or by adhesive bonding.

The spacer may be arranged inside the recess of the piston, and the piston may be movable in view of the spacer when the piston is moved from the retracted position to the extended position.

The modular actuator may be provided with a range of different spacers having different volumes and geometries. Thereby the volume of the gas chamber inside one and the same housing may be adapted to thereby meet a specific application of the actuator. Two or more spacers may be combined to provide a desired volume of the gas chamber.

The piston may be made of a plastic material. The piston may be formed by injection moulding or by 3D printing.

By injection moulding or 3D printing, the piston may be given a complex geometry allowing formation of e.g. one or more recesses that can be used in different ways depending on an expected effect. By way of example, the one or more recesses may be used to fixate the gas generator in the gas chamber in different positions in view of the housing. Thereby it is made possible to adapt the force which is applied by the gas generator to a pressure surface of the piston when deploying the gas generator.

The one or more recesses may be arranged to provide the gas chamber a given volume as seen in a condition when the piston is in its retracted position. The one or more recesses may also be used to fixate one or more spacers to the piston to thereby provide the gas chamber a given volume as seen in a condition when the piston is in its retracted position.

Furter, the one or more recesses may be used to provide the piston with a tailormade contact surface with the inner wall of the housing. Thus, the recess may be along the interior of the piston, but it may also be formed as one or more grooves in the outer envelope surface of the piston. The latter makes it possible to better control the friction between the piston and the housing when the piston is moved from the retracted position to the extended position. The friction may by way of example be used to control the speed characteristics of the piston upon deployment of the gas generator.

The modular actuator may further comprise a power connector configured to power the gas generator, said power connector being connected to a supporting element of the piston, said supporting element projecting outside the housing.

In the event the power connector is arranged outside the housing and the gas generator is arranged in the gas chamber inside the housing, a connecting wire may extend between the gas generator and the power connector to thereby power the gas generator. The connecting wire may be arranged to extend along a groove in an outer wall portion of the piston or be arranged to extend in a channel arranged inside the piston.

The modular actuator may further comprise a power connector configured to power the gas generator, said power connector being arranged adjacent the bottom wall of the housing. The power connector may be configured to connect to the gas generator via an opening in the bottom wall of the housing.

The housing may be formed by deep drawing a metallic material. Deep drawing allows an easy manufacturing of the housing without any need for welding to form lugs and the like which are normally used to fixate the actuator to the vehicle. Further, since the housing may be formed without welding, there is no risk of introducing welding related cracks or tensions in the material.

The safety device may in one embodiment be a hood lifter in a vehicle.

The safety device may in one embodiment be a seat belt pretensioner.

The safety device may in one embodiment be a seat structure reinforcer.

### Brief description of the drawings

The invention will be described in detail with reference to the schematic drawings.
Fig. 1 discloses a schematic cross section of a modular actuator according to one embodiment of the invention.
Figs. 2a-2c disclose three different schematic cross sections of a modular actuator according to the invention with three pistons having recesses of different depths.
Fig. 3 discloses a schematic cross section of a modular actuator according to the invention using a spacer.
Fig. 4 discloses a schematic cross section of another modular actuator according to the invention using a piston with a recess and a top mounted gas generator.
Fig. 5 discloses a schematic cross section of yet another modular actuator according to the invention using a piston with a recess and a top mounted gas generator.
Fig. 6 discloses, highly schematically a graph with piston force versus time and stroke length versus time for pistons having a gas chamber with a small volume in combination with different pyrotechnical loads.
Fig. 7 discloses, highly schematically a graph with piston force versus time and stroke length versus time for pistons having a gas chamber with a large in combination with different pyrotechnical loads.

### Detailed description

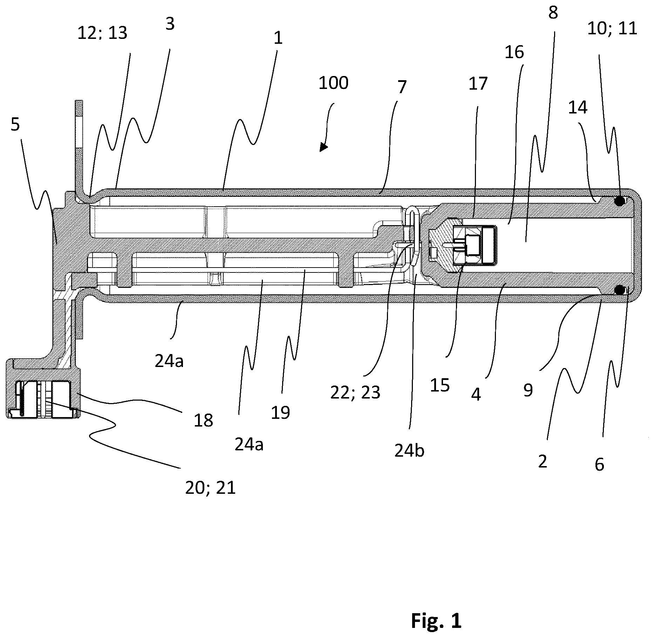

Now turning to Fig. 1 a schematic cross section of one embodiment of a safety device with a modular actuator 100 is disclosed. The actuator 100 is disclosed with its piston in a fully retracted position.

The modular actuator 100 comprises a housing 1 in the form of a hollow cylinder having a first end 2 and second end 3. The housing 1 may be formed by deep drawn metallic material. The first end 2 is a closed end. The housing 1 contains a piston 4. The piston 4 is disclosed as having a portion 5 extending out from the housing 1 via the second end 3 of the housing 1. It is to be understood that the piston 4 with remained function of the invention also may be of a type where the piston 4 is fully contained in the housing 1 when the piston 4 is in its fully retracted position.

The piston 4 is fit in the housing 1. The piston 4 is axially movable inside the housing 1 from the retracted position to a full or substantially full extended position. The retracted position is the default position of the piston 4.

The piston 4 has a pressure surface 6 facing the first end 2 of the housing 1. The pressure surface 6 typically has an outer cross-sectional area and an outer cross-sectional geometry that substantially corresponds to an inner cross-sectional area and inner cross-sectional geometry of the housing 1. Thereby, inner walls 7 of the housing 1 together with the pressure surface 6 of the piston 4 defines a gas chamber 8. The volume of the gas chamber 8 is variable depending on the momentary axial position of the piston 4 inside the housing 1. The gas chamber 8 has its smallest volume when the piston 4 is in its fully retracted position and its largest volume when the piston 4 is in its fully extended position.

An envelope surface 9 of the piston 4 supports a sealing ring 10 that sealingly abuts an axial portion of the inner wall 7 of the housing 1. The sealing ring 10 is received in a circumferential recess 11 in the envelope surface 9 of the piston 4.

An end portion 12 of the housing 1 adjacent the second end 3 of the housing 1 comprises a neck portion 13 having a locally reduced cross-sectional area. An edge portion 14 of the piston 4 opposite the pressure surface 6 is configured to abut said edge portion 14 in a condition when the piston is set to its full extended position. Thereby, a physical stop is formed which prevents the piston 4 from falling out of the housing 1.

The modular actuator 100 further comprises a gas generator 15. The gas generator 15 is in the disclosed embodiment situated in the gas chamber 8. The gas generator 15 is in the disclosed embodiment disclosed as being received in an axially extending recess 16 of the piston 4 and hence supported by the piston 4. In an alternative solution, not illustrated, the gas generator 15 may be arranged adjacent the first end 2 of the housing 1. Hence, the gas generator 15 must not be supported by the piston 4. No matter position of the gas generator 15, the gas chamber 8 is defined by the inner wall 7 of the housing 1, an inner wall 17 of the recess 16, the pressure surface 6 of the piston 4 and the gas generator 15.

The gas generator 15 is in the disclosed embodiment indirectly connected to a power connector 18. The power connector 18 is arranged outside the housing 1 supported by the portion 5 of the piston 4 that extends out from the housing 1. The power connector 18 is in this embodiment designed to communicate with and to power the gas generator 15 via a conductive wire arrangement 19 that extends along the axial extension of the piston 4 and hence inside the housing 1. The conductive wire arrangement 19 may be arranged in one or more recesses 24a, 24b in the outer envelope wall of the piston 4. The conductive wire arrangement 19 has a first set of terminals 20 connecting to terminals 21 of the power connector 18 and a second set of terminals 22 connecting to terminals 23 of the gas generator 15.

In the event the gas generator 15 instead should be arranged adjacent the first end 2 of the housing 1, the power connector 18 may be arranged on the first end 2 of the housing 1 and communicate with and power the gas generator 15 via an opening in the first end 2 of the housing 1.

The power connector 18 is, no matter position, configured to be connected to an Electronic Control Unit, ECU (not illustrated) of a vehicle in a manner well known in the art. In the event the ECU via a crash sensor and processor integrated in the ECU should determine that there is an emergency situation to be responded to, such as a frontal crash, an activation signal is communicated to an ignitor of the gas generator 15 which deploys the same. The gas generator 15 will in turn generate a gas volume having a pressure substantially higher than the ambient pressure. The gas acts on the pressure surface 6 of the piston 4 and forces the piston 4 to move in the axial direction from its retracted position to its extended position.

The piston 4 is according to the invention preferably made of a plastic material. The piston 4 is preferably formed by injection moulding or by 3D printing. By injection moulding or 3D printing, the piston 4 may be given a complex geometry allowing formation of e.g. one or more recesses 16 that can be used in different ways depending on an expected effect. The recess 16 may by way of example be part of the gas chamber 8.

A number of different embodiment and combination of different features will be exemplified below. By way of example, the one or more recesses 16, 24a, 24b may be used to fixate the gas generator in the gas chamber in different positions in view of the housing, to reduce friction between the piston 4 and the inner wall of the housing 1 or to receive the wire conducting arrangement 19. The central recess 16 may be arranged to provide the gas chamber 8 a given volume as seen in a condition when the piston is in its retracted position and also to reduce weight. The central recess 16 may also be used to fixate one or more spacers as will be described below to the piston 4 to thereby provide the gas chamber 8 with a given volume as seen in a condition when the piston 4 is in its retracted position. Furter, the one or more recesses 16, 24a, 24b may be used to provide the piston 4 with a tailormade contact surface with the inner wall of the housing 1. Thus, recesses 16, 24a, 24b may be formed along the interior of the piston **4,** but it may also be formed as one or more grooves in the outer envelope surface of the piston 4. The latter makes it possible to better control the friction between the piston and the housing when the piston is moved from the retracted position to the extended position. The friction may by way of example be used to control the speed characteristics of the piston upon deployment of the gas generator.

In the following, it will be described how the characteristics of modular actuator 100 and hence the safety device may be changed in line with the invention.

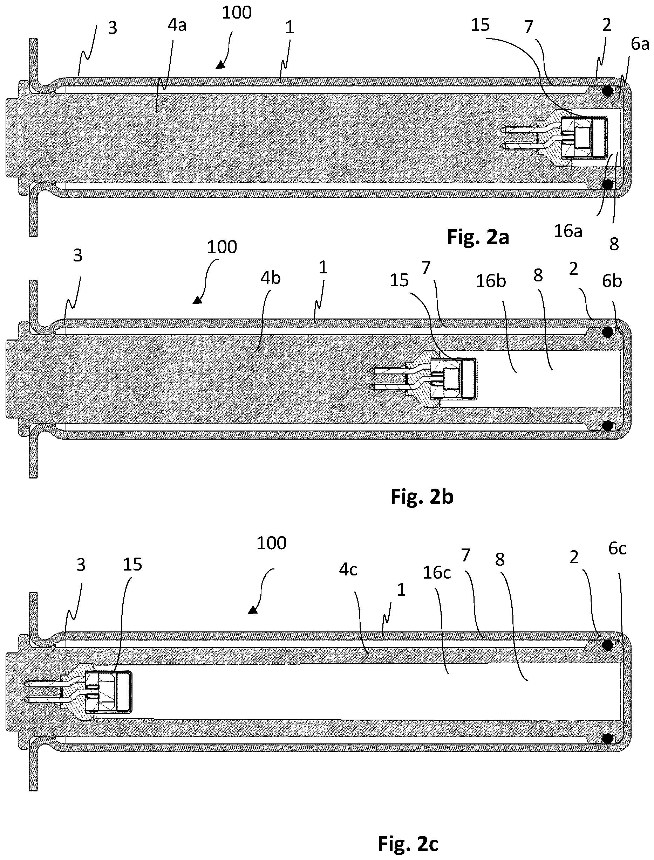

Starting with Figs. 2a-2c, one way to change the characteristics of the modular actuator 100 is by changing the volume of the gas chamber 8. Figs. 2a-2c disclose a simplified model of a modular actuator 100 according to the invention. To facilitate understanding the power connector has been omitted. Also, the conductive wire arrangement that extends between the power conductor and the gas generated has been omitted. Figs. 2a-2c discloses one and the same housing 1 that is provided with three different pistons 4a-4c.

The housing 1 may be formed by deep drawing a metallic material. Deep drawing allows an easy manufacturing of the housing without any need for welding to form lugs and the like which are normally used to fixate the actuator to the vehicle. Further, since the housing may be formed without welding, there is no risk of introducing cracks or tensions in the material.

All pistons 4a-4c have the same outer dimensions, i.e. the same length, and hence the same available stroke length, and also the same outer cross sectional dimensions. The three pistons 4a-4c are all provided with an inner axially extending recess 16a-16c that extends from the pressure surface 6a-6c facing the first end 2 of the housing 1 towards the second end 3 of the housing 1. The recess 16a-16c has a mouth facing the first end of the housing. The recess 16a-16c has the same inner diameter in all three embodiments. Further, the gas generator 15 is in all three embodiments arranged in the recess 16a-16c and connected to the bottom of the recess. The gas generator 15 may be fixated in the recess, e.g. by press-fitting or by adhesive bonding.

The axial depth of the recesses 16a-16c differs between the three embodiments. Thereby, the volume of the gas chamber 8, which volume is defined between the inner wall 7 of the housing 1, the pressure surface 6a-6c of the pistons 4a-4c and the gas generator 15 received in the gas chamber, may, in an embodiment not forming part of the invention, be changed, simply by replacing one piston having a first volume, i.e. a first size of the recess, with a piston with a second volume, i.e. a second sized of the recess.

The different volumes and also the different distances between the pressure surfaces 6a-6c of the pistons 4a-4c and the position of the gas generator 15 for the three pistons 4a-4c results in different impact forces between a generated gas flow and the pressure surfaces 6a-6c. This results in different characteristics of a resulting actuator when applied in a vehicle in the event a crash should occur. The larger gas chamber volume, the lower impact force. Further, the larger gas chamber volume, the longer time for the piston to reach its full extended position.

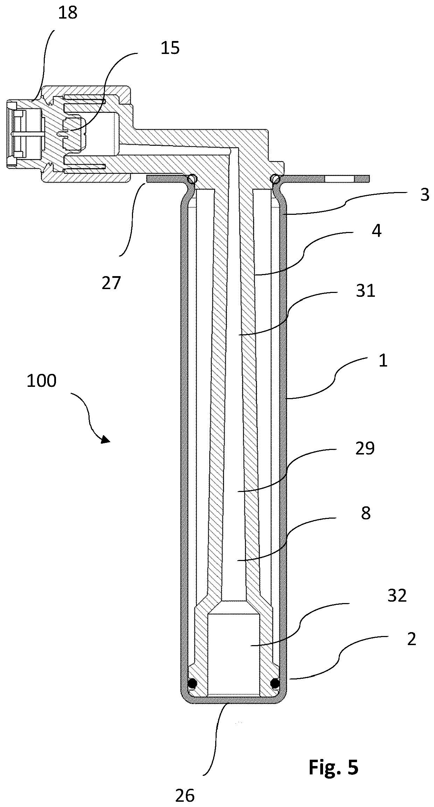

The recesses 16a-16c may as disclosed in Figs. 2a-2c have a uniform cross section along their axial extensions. The recess 16a-16c may in another embodiment have a cross section that tapers towards the second end 3 of the housing 1. One such embodiment is disclosed in Fig. 5, which embodiment will be further discussed below.

The recesses 16a-16c may be used to increase the volume of the gas chamber 8 as compared to a uniform, solid piston received in a cylindrical housing. The recess 16a-16c may in yet another embodiment be used to control the pressure surface 6a-6c of the piston, i.e. surface where the gas that is generated by the gas generator upon a deployment impacts the piston. All these aspects may be used independently of each other to influence the characteristics of the actuator to thereby meet a specific application.

It is not only the geometry and volume of the gas chamber 8 that may be changed to change the characteristics of the modular actuator 100. As a part of the modularity, also gas generators 15 of different pyrotechnical load may be arranged in the piston 4. Thereby the amount of gas and especially the pressure of the generated gas upon deployment of the gas generator may be altered depending on the desired characteristics.

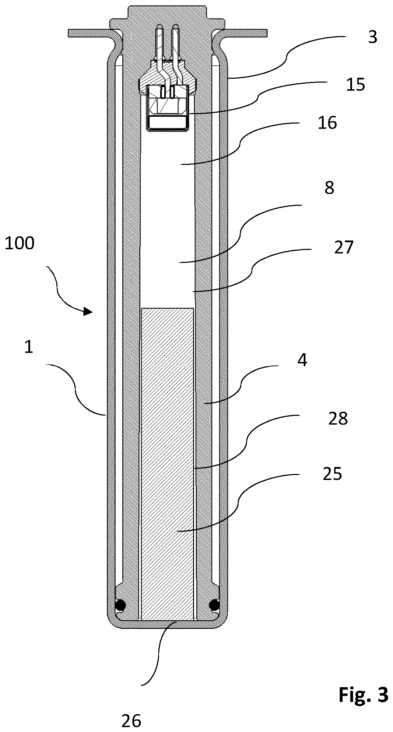

Now turning to Fig. 3, another embodiment of a modular actuator 100 of a safety device is disclosed. The housing 1 has the very same dimensions and design as the housing 1 previously described in Figs. 2a-2c. Further, the piston 4 as such has the same design as described in Figs. 2a-2c, with an axially extending recess 16. The embodiment of Fig. 3 differs from the disclosure in Figs 2a-2c in that the recess 16 is provided with a spacer 25. The spacer 25 is arranged coaxially inside the recess 16.

The piston 4 is movable in view of the spacer 25 when the piston 4 is moved from the retracted position to the extended position. Thus, the spacer 25 is slidingly received in the recess 16. Also, the spacer 25 is disclosed as being arranged adjacent the inner bottom wall 26 of the housing 1. The gas chamber 8 is hence in this embodiment defined by the inner walls 27 of the recess 16, an end of the spacer 25 facing the second end 3 of the housing 1 and the gas generator 15 that is supported by the piston.

In a condition when the gas generator 15 is deployed, the generated gas will act against the end of the spacer 25 facing the second end 3 of the housing 1. This will force the piston to move from its retracted position to its extended position by the piston axially moving inside the housing 1 and along an outer envelope wall 28 of the spacer 25. Accordingly, there is a relative movement between the spacer 25 and the piston 4 in this embodiment.

The modular actuator may be provided with a range of different spacers 25 having different volumes, different axial lengths and geometries. It is to be understood that the spacer 25 must not be arranged in level with the bottom wall 26 of the housing 1. Also, the recess 16 may be provided with two or more spacers that are arranged one after the other in the recess to provide a desired volume of the gas chamber.

Accordingly, by using one or more spacers, the volume of the gas chamber inside one single housing may be adapted to meet a specific application of the actuator.

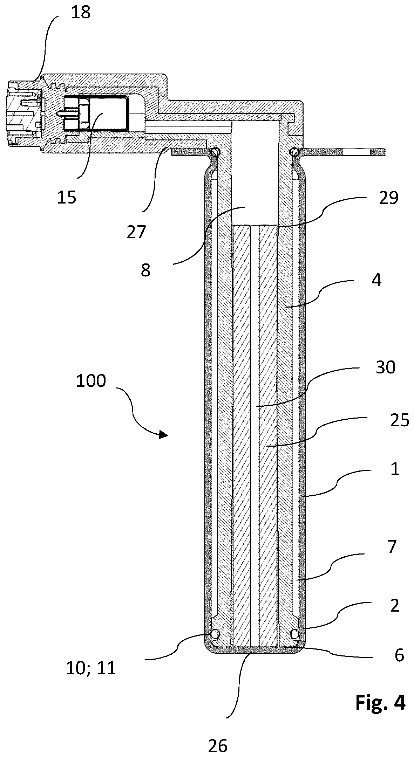

Now turning to Fig. **4****,** another embodiment of a modular actuator 100 according to the invention is described. The housing 1 has the very same dimensions and design as the housing previously described in Figs. 2a-2c. However, as an essential difference, the gas generator 15 and also the power connector 18 connected to the gas generator 15 are both supported by the piston 4 in a position on the outside of the housing 1. The gas generator 15 and the power connector 18 are connected to a supporting element 27 of the piston 4. The supporting element 27 projects outside the housing 1. The power connector 18 and the gas generator 15 are arranged in a position off-set from a longitudinal centerline of the piston 4 to thereby not come in contact, e.g. with a hood in the event the modular actuator is used is part of a safety device that is a hood lifter.

The piston 4 has a substantially cylindrical outer envelope wall with a uniform diameter along its full extension. The pressure surface 6 of the piston **4,** facing the first end 2 of the housing 1 has a locally enlarged diameter to form a guiding portion configured to slidingly abut the inner wall 7 of the housing 1. The guiding portion is provided with a circumferentially extending recess 11 which in turn supports a sealing ring 10. The piston 4 is slidingly received in the housing 1 and has an inner channel 29 extending along the axial extension of the piston 4. The channel 29 contains a coaxially extending spacer 25. The spacer 25 has an inner channel 30 extending along the full axial extension. A first free end of the channel 30 of the spacer 25 is facing the gas generator 15 whereas a second free end of the channel of the spacer 25 is facing the first end 2 of the housing 1. Thereby a gas chamber 8 is defined by the channel 29 in the piston **4,** the channel 30 of the spacer 25, the gas generator 15 and the wall 26 of the second end 2 of the housing 1. Thus, by providing one or more spacer(s) of different lengths, different diameters of the channel 30 of the spacer 25, the volume of the gas chamber 8 may be changed. Thereby the volume of the gas chamber 8 inside one single housing 1 may be adapted to meet a specific application of the actuator. Two or more spacers 25 may combined along the axial extension to provide a desired volume of the gas chamber 8.

Now turning to Fig. 5, another embodiment of a modular actuator 100 according to the invention is described. The modular actuator 100 has the overall same design as the actuator in Fig. 4 with the gas generator 15 and the power connector 18 supported by the piston 4 in a position on the outside of the housing 1.

The piston 4 differs from the piston of Fig. 4 in that it has a conical shape tapering towards the first end 2 of the housing 1. The piston 4 comprises an inner channel 29 extending along the axial extension of the piston 4. The channel 29 has a first conical portion 31 that tapers towards the first end 2 of the housing 1. The first conical portion 31 merges with a second portion 32 facing the first end 2 of the housing 1. Thereby a gas chamber 8 is defined by the inner wall of the channel 29 in the piston **4,** the gas generator 15 and the wall 26 of the first end 2 of the housing 1.

As yet another difference in view of the embodiment of Fig. **4****,** the gas generator 15 is smaller. Thus, as a part of the invention, no matter design of the housing 1, the piston 4 and spacers 25, also the type of gas generator 15 and its pyrotechnical load may be adapted to meet a specific application of the actuator.

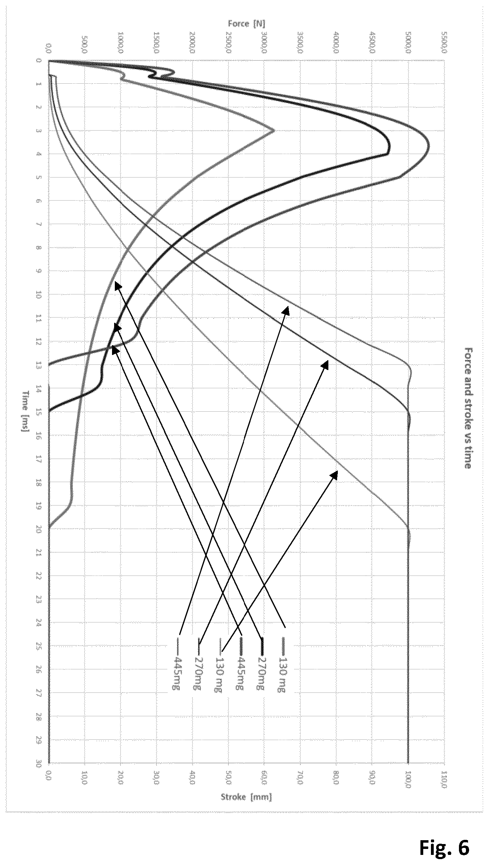

Now turning to Fig. 6 a graph is shown exemplifying different characteristics that may achieved by a modular actuator 100 according to the invention. One and the same actuator having a small gas chamber is used. In the tests, the actuator is provided with three different gas generators with different pyrotechnical loads: 130 mg, 270 mg and 445 mg respectively. For each pyrotechnical load the force versus time was measured and also the stroke length versus time. The left hand Y-axis in the graph represents the force [N] and the right hand Y-axis represents stroke length [mm]. The X-axis represents time [ms].

As can be seen from this graph, by a 130 mg pyrotechnical load versus a 445 mg pyrotechnical load, the peak force is substantially lower and also the lifting time is slower.

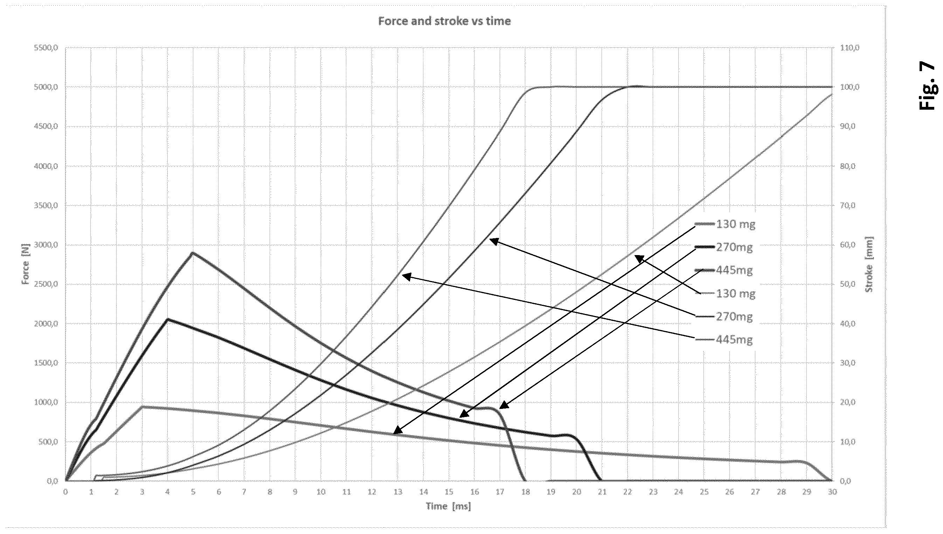

Now turning to Fig. 7 a graph is shown exemplifying different characteristics that may achieved by a modular actuator according to the invention. One and the same actuator as was used in Fig. 6 was used, but now having a large gas chamber. In the tests, the actuator is provided with three different gas generators with different pyrotechnical loads: 130 mg, 270 mg and 445 mg. For each load the force versus time was measured and also the stroke length versus time. The left hand Y-axis represents the force [N] and the right hand Y-axis represents stroke length [mm]. The X-axis represents time [ms].

As can be seen from this graph, by a 130 mg load vs a 445 mg load, the peak force is substantially lower and also the lifting time is substantially slower. When comparing the graphs of Figs.6 and Fig. 7 it can be seen that by increasing the volume of the gas chamber from small to large the force will be substantially lower and also it takes a longer time to reach the peak force. Further, when comparing the graphs of Figs.6 and Fig. 7 it can be seen that by increasing the volume of the gas chamber from small to large, it takes a substantially longer time to reach the full stroke length of the piston.

Accordingly, by changing the volume of the gas chamber and the pyrotechnical load of the gas generator, different characteristics of the actuator may be provided for. By using the inventive idea of providing a modular actuator with the possibility to interchange different components independently of each other it is possible to fine tune the characteristics depending on the intended usage of the actuator to a low cost. This allows, not only a better performance but also a lower cost.

Although the safety device has been described above in the context of a hood lifter in a vehicle, the very same principle is equally applicable to the situation where the safety device instead is a seat belt pretensioner or a seat structure reinforcing piston to reinforce the seat structure during high load situations.

The invention has been described and exemplified above based on an embodiment where the power connector is arranged adjacent the second end of the housing. The skilled person realizes that the same modular principle is equally applicable if the power connector instead is connected at the first end of the housing. The power connector may in such case be configured to connect to the gas generator via an opening in the wall of the housing.

## Claims

1. A safety device in a vehicle, the safety device comprising a modular actuator (100) comprising a housing (1) having a first end (2), a piston (4) adapted to fit in the housing (1) and being configured to be moved from a retracted position to an extended position, and a gas generator (15), wherein
the piston (4) comprises an axially extending recess (16) having a mouth facing the first end (2) of the housing (1),
the piston (4) has a first end forming a pressure surface (6) facing the first end (2) of the housing (1),
a gas chamber (8) is formed between the pressure surface (6) of the piston (4) and an inner wall (7) of the first end (2) of the housing (1), and the gas generator (15) is in fluid connection with the gas chamber (8); and wherein
the volume of the gas chamber (8) as seen in a condition when the piston (4) is in the retracted position is configured to be selectively adapted by
coaxially arranging a spacer (25) inside the recess (16) of the piston (4).

2. The safety device according to claim 1, wherein the gas generator (15) is
arranged in the recess (16).

3. The safety device according to claim 2, wherein the spacer (15) is arranged inside the recess (16) of the piston (4), and wherein the piston (4) is movable in view of the spacer (25) when the piston (4) is moved from the retracted position to the extended position.

4. The safety device according to claim 1, wherein the piston (4) is made of a plastic material.

5. The safety device according to claim 1, further comprising a power connector (18) configured to power the gas generator (15), said power connector (18) being connected to a supporting element (27) of a piston, said supporting element projecting outside the housing (1).

6. The safety device according to claim 1, further comprising a power connector (18) configured to power the gas generator (15), said power connector (18) being arranged adjacent the first end (2) of the housing (1).

7. The safety device according to any of the preceding claims, wherein the housing is formed by deep drawing a metallic material.

8. The safety device according to any of claims 1-7, wherein the safety device is a hood lifter in a vehicle.

9. The safety device according to any of claims 1-7, wherein the safety device is a seat belt pretensioner in a vehicle.

10. The safety device according to any of the claims 1-7, wherein the safety device is a seat structure reinforcer in a vehicle.

## Patentansprüche

1. Sicherheitsvorrichtung in einem Fahrzeug, die Sicherheitsvorrichtung umfassend einen modularen Aktuator (100), umfassend ein Gehäuse (1), das ein erstes Ende (2) aufweist, einen Kolben (4), der angepasst ist, um in das Gehäuse (1) zu passen und konfiguriert ist, um von einer eingefahrenen Position in eine ausgefahrene Position bewegt zu werden, und einen Gasgenerator (15), wobei
der Kolben (4) eine sich axial erstreckende Aussparung (16) aufweist, die eine Mündung aufweist, die dem ersten Ende (2) des Gehäuses (1) zugewandt ist,
der Kolben (4) ein erstes Ende aufweist, das eine Druckoberfläche (6) ausbildet, die dem ersten Ende (2) des Gehäuses (1) zugewandt ist,
eine Gaskammer (8) zwischen der Druckoberfläche (6) des Kolbens (4) und einer Innenwand (7) des ersten Endes (2) des Gehäuses (1) ausgebildet ist, und der Gasgenerator (15) in Fluidverbindung mit der Gaskammer (8) steht; und wobei
das Volumen der Gaskammer (8), wie gesehen in einem Zustand, in dem der Kolben (4) in der eingefahrenen Position ist, konfiguriert ist, um selektiv angepasst zu werden durch
koaxiales Anordnen eines Abstandshalters (25) im Inneren der Aussparung (16) des Kolbens (4).

2. Sicherheitsvorrichtung nach Anspruch 1, wobei der Gasgenerator (15) in der Aussparung (16) angeordnet ist.

3. Sicherheitsvorrichtung nach Anspruch 2, wobei der Abstandshalter (15) im Inneren der Aussparung (16) des Kolbens (4) angeordnet ist, und wobei der Kolben (4) im Hinblick auf den Abstandshalter (25) beweglich ist, wenn der Kolben (4) von der eingefahrenen Position in die ausgefahrene Position bewegt wird.

4. Sicherheitsvorrichtung nach Anspruch 1, wobei der Kolben (4) aus einem Kunststoffmaterial gefertigt ist.

5. Sicherheitsvorrichtung nach Anspruch 1, ferner umfassend einen Leistungsanschluss (18), der konfiguriert ist, um den Gasgenerator (15) mit Leistung zu versorgen, wobei der Leistungsanschluss (18) an ein Stützelement (27) eines Kolbens angeschlossen ist und das Stützelement aus dem Gehäuse (1) herausragt.

6. Sicherheitsvorrichtung nach Anspruch 1, ferner umfassend einen Leistungsanschluss (18), der konfiguriert ist, um den Gasgenerator (15) mit Leistung zu versorgen, wobei der Leistungsanschluss (18) benachbart zu dem ersten Ende (2) des Gehäuses (1) angeordnet ist.

7. Sicherheitsvorrichtung nach einem der vorstehenden Ansprüche, wobei das Gehäuse durch Tiefziehen eines metallischen Materials ausgebildet ist.

8. Sicherheitsvorrichtung nach einem der Ansprüche 1 bis 7, wobei die Sicherheitsvorrichtung ein Motorhaubenheber in einem Fahrzeug ist.

9. Sicherheitsvorrichtung nach einem der Ansprüche 1 bis 7, wobei die Sicherheitsvorrichtung ein Sicherheitsgurtstraffer in einem Fahrzeug ist.

10. Sicherheitsvorrichtung nach einem der Ansprüche 1 bis 7, wobei die Sicherheitsvorrichtung ein Sitzstrukturverstärker in einem Fahrzeug ist.

## Revendications

1. Dispositif de sécurité dans un véhicule, le dispositif de sécurité comprenant un actionneur modulaire (100) comprenant un logement (1) ayant une première extrémité (2), un piston (4) adapté pour s'ajuster dans le logement (1) et étant conçu pour être déplacé d'une position rétractée à une position étendue, et un générateur de gaz (15), dans lequel
le piston (4) comprend une cavité (16) s'étendant axialement ayant une embouchure orientée vers la première extrémité (2) du logement (1),
le piston (4) a une première extrémité formant une surface de pression (6) orientée vers la première extrémité (2) du logement (1),
une chambre à gaz (8) est formée entre la surface de pression (6) du piston (4) et une paroi interne (7) de la première extrémité (2) du logement (1), et le générateur de gaz (15) est en liaison fluidique avec la chambre à gaz (8) ; et dans lequel
le volume de la chambre à gaz (8) vu dans un état où le piston (4) est en position rétractée est conçu pour être sélectivement adapté par
la disposition coaxiale d'une entretoise (25) à l'intérieur de la cavité (16) du piston (4).

2. Dispositif de sécurité selon la revendication 1, dans lequel le générateur de gaz (15) est agencé dans la cavité (16).

3. Dispositif de sécurité selon la revendication 2, dans lequel l'entretoise (15) est agencée à l'intérieur de la cavité (16) du piston (4), et dans lequel le piston (4) est mobile en vue de l'entretoise (25) lorsque le piston (4) est déplacé de la position rétractée à la position étendue.

4. Dispositif de sécurité selon la revendication 1, dans lequel le piston (4) est constitué d'une matière plastique.

5. Dispositif de sécurité selon la revendication 1, comprenant en outre un connecteur d'alimentation (18) configuré pour alimenter le générateur de gaz (15), ledit connecteur d'alimentation (18) étant connecté à un élément de support (27) d'un piston, ledit élément de support faisant saillie à l'extérieur du logement (1).

6. Dispositif de sécurité selon la revendication 1, comprenant en outre un connecteur d'alimentation (18) configuré pour alimenter le générateur de gaz (15), ledit connecteur d'alimentation (18) étant agencé à proximité de la première extrémité (2) du logement (1).

7. Dispositif de sécurité selon l'une quelconque des revendications précédentes, dans lequel le logement est formé par emboutissage profond d'un matériau métallique.

8. Dispositif de sécurité selon l'une quelconque des revendications 1 à 7, dans lequel le dispositif de sécurité est un lève-capot dans un véhicule.

9. Dispositif de sécurité selon l'une quelconque des revendications 1 à 7, dans lequel le dispositif de sécurité est un prétendeur de ceinture de sécurité dans un véhicule.

10. Dispositif de sécurité selon l'une quelconque des revendications 1 à 7, dans lequel le dispositif de sécurité est un renfort de structure de siège dans un véhicule.
